# EUROPÄISCHE PATENTSCHRIFT

(11) **EP 4 129 759 B1**
(45) Veröffentlichungstag und Bekanntmachung des Hinweises auf die Patenterteilung: **26.06.2024**
(21) Anmeldenummer: 22189059.3
(22) Anmeldetag: 05.08.2022
(51) Int. Cl.: B60P 3/32, B60P 3/34, B62D 63/06, E04H 15/06, B62K 27/00

(54) **CAMPING-FAHRRADANHÄNGER**
CAMPING BICYCLE TRAILER
REMORQUE DE BICYCLETTE DE CAMPING

(30) Priorität: 06.08.2021 CH 0701402021
(43) Veröffentlichungstag der Anmeldung: 08.02.2023
(73) Patentinhaber: Wittwer, Hansjörg, 9463 Oberriet (CH)
(72) Erfinder: Wittwer, Hansjörg, 9463 Oberriet (CH)
(74) Vertreter: Swisspat Riederer Hasler Patentanwälte AG

(56) Entgegenhaltungen:
- CN-U- 212 332 865
- DE-U1- 20 301 560
- JP-A- 2011 194 909
- KR-B1- 101 436 284
- KR-U- 20180 001 710
- US-B1- 6 296 297

## Beschreibung

### Gebiet der Erfindung

Die Erfindung betrifft einen Camping-Fahrradanhänger zum Bereitstellen einer Liegefläche und zum Überspannen der Liegefläche mit einer Zeltplane gemäss Oberbegriff des Anspruches 1.

### Stand der Technik

Aus dem Stand der Technik auf dem Gebiet von Fahrradanhängern sind solche bekannt, welche durch Ausklappen eine Liegefläche für eine ausgestreckte Person bereitstellen. Über der Liegefläche kann ein Zelt aufgebaut werden.

Diese Fahrradanhänger sind jedoch sehr teuer in der Herstellung, da es sich um spezielle Anfertigungen mit geringen Stückzahlen handelt. Zudem sind diese Fahrradanhänger unpraktisch beim Fahrradfahren, da die Plattform des Fahrradanhängers im fahrbereiten Zustand eine Länge von wenigstens einem Meter aufweist.

Zum Beispiel, Dokument CN 212 332 865 U offenbart ein Camping-Fahrradanhänger nach dem Präambel des Anspruchs 1.

### Aufgabe der Erfindung

Aus den Nachteilen des beschriebenen Stands der Technik resultiert die Aufgabe einen Camping-Fahrradanhänger zu schaffen, der kostengünstig in der Herstellung ist.

Eine weitere Aufgabe besteht darin, einen Fahrradanhänger der oben beschriebenen Art zu zeigen, welcher möglichst kleine Abmessungen im fahrbereiten Zustand aufweist und trotzdem ausreichend Stauraum für eine Campingausrüstung bereitstellt.

### Beschreibung

Die Lösung der gestellten Aufgabe gelingt bei einem Camping-Fahrradanhänger durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche. Grundsätzlich ist der Camping-Fahrradanhänger dazu vorgesehen, dass er von einem Fahrrad bzw. einem Elektro-Fahrrad gezogen wird. Denkbar ist es auch, dass bei entsprechender Zulassung auch andere Zugfahrzeuge zum Einsatz kommen.

Die Erfindung zeichnet sich bevorzugt dadurch aus, dass die erste Rahmenkonstruktion gelenkig mit einer zweiten Plattform und die zweite Plattform gelenkig mit einer dritten Plattform verbunden ist, wodurch sich die zweite und dritte Plattform zwischen einer eingeklappten Position, in welcher der Anhänger fahrbereit ist, und einer ausgeklappten Position, in welcher die Plattformen eine Liegefläche bilden, verschwenkbar sind. Diese Dreiteiligkeit hat den Vorteil, dass einerseits eine Liegefläche vorhanden ist, welche eine komfortable Länge von bis zu 2 Meter besitzt. Andererseits sind die zweite und dritte Plattform in der eingeklappten Position optimal positioniert, um den fahrbereiten Fahrradanhänger möglichst kurz und dementsprechend wendig zu machen. Das Wechseln zwischen der eingeklappten und der ausgeklappten Position kann sehr rasch in weniger als 3 Minuten erfolgen.

In einer weiteren besonders bevorzugten Ausführungsform der Erfindung weist der Anhänger eine zweite und eine dritte Rahmenkonstruktion auf, wobei die zweite Rahmenkonstruktion gelenkig mit der ersten und der dritten Rahmenkonstruktion verbunden ist und die dritte Rahmenkonstruktion gelenkig mit der zweiten Rahmenkonstruktion und der dritten Plattform verbunden ist. Die zweite und die dritte Rahmenkonstruktion dienen als Halter für eine Zeltplane, sodass die Liegefläche geschützt ist. Gleichzeitig stabilisieren die Rahmenkonstruktionen die zweite und dritte Plattform im ausgeklappten Zustand.

In einer weiteren besonders bevorzugten Ausführungsform ist die zweite und dritte Plattform von einer vierten Rahmenkonstruktion getragen, welche am Übergang von der zweiten zur dritten Plattform klappbar ist. Dadurch ist die Liegefläche ausreichend stabil und trotzdem rasch zusammenklappbar. Durch diese Stabilisierung durch die vierte Rahmenkonstruktion müssen die Plattformen nicht zwangsläufig flächendeckend ausgeführt sein, sondern können auch als Lattenroste oder andere schlafkomfortsteigernde Elemente realisiert sein.

Als zweckdienlich hat es sich erwiesen, wenn unterhalb der ersten Plattform eine vierte Plattform angeordnet ist, wodurch zwischen der ersten und der vierten Plattform ein Stauraum gebildet ist. Der Stauraum kann für die unterschiedlichsten Camping Ausrüstungsgegenstände genutzt werden und kann auch für die Aufnahme einer Batterie dienen. Die Batterie kann beispielsweise über eine an der Zeltplane angeordnete Solarzelle geladen werden. Der Stauraum kann über eine an der ersten Plattform vorgesehene Luke zugänglich sein.

Die Erfindung zeichnet sich auch bevorzugt dadurch aus, dass der Fahrradanhänger als Basis einen zwei-sitzigen Kinderanhänger besitzt, welcher Kinderanhänger die vierte Plattform, die Achse mit den zwei Laufrädern, die Deichsel und die erste Rahmenkonstruktion aufweist. Solche Kinderanhänger werden in grosser Stückzahl gebaut und dementsprechend kostenoptimiert ist deren Herstellung. Dadurch, dass ein Kinderanhänger als Grundchassis für den Camping-Fahrradanhänger dienen kann, kann die Herstellung des Camping-Fahrradanhängers kostenoptimiert erfolgen.

In einer weiteren bevorzugten Ausführungsform der Erfindung bilden die zweite bis vierte Rahmenkonstruktion ein klappbares Gestänge, die erste Rahmenkonstruktion bildet ein festes Gestänge und die Rahmenkonstruktionen bilden im ausgeklappten Zustand ein Tragwerk. Der Anhänger ist daher in der ausgeklappten Position sehr stabil und besitzt im fahrbereiten Zustand Abmessungen, welche die eines handelsüblichen Kinderanhängers nur unwesentlich übersteigen. Dadurch bleibt der Anhänger wendig, während er von einem Fahrrad gezogen wird.

Mit Vorteil weist die zweite Rahmenkonstruktion zwei erste Längsstangen auf, welche beim Wechsel von der ausgeklappten Position in die eingeklappte Positionen nach aussen klappbar sind.

Mit Vorteil weist die dritte Rahmenkonstruktion zwei zweite Längsstangen aufweist, welche beim Wechsel von der ausgeklappten Position in die eingeklappte Positionen nach innen klappbar sind.

Mit Vorteil weist die vierte Rahmenkonstruktion zwei dritte Längsstangen auf, welche beim Wechsel von der ausgeklappten Position in die eingeklappte Positionen nach innen klappbar sind.

Mit nach innen und aussen klappbar ist im Rahmen dieser Anmeldung gemeint, dass im ausgeklappten Zustand die Längsstangen einer Rahmenkonstruktion zu den Längsstangen der anderen Rahmenkonstruktionen hin- oder weggeklappt werden. Die klappbaren Längsstangen ermöglichen, dass der Anhänger als ein vollwertiges Campingzelt nutzbar ist und in wenigen Minuten zu einem fahrbereiten Anhänger mit geringen Abmessungen umwandelbar ist. Genauso rasch wird aus dem fahrbereiten Anhänger ein Campingzelt. Die Längsstangen und deren Gelenke sind derart ausgeführt, dass sie in der ausgeklappten Position ein eigenstabiles Tragwerk bilden und nicht zusammenklappen können. Erst durch gleichzeitiges Klappen der Längsstangen geben die Gelenke nach und das Gestänge fällt zusammen.

In einer weiteren bevorzugten Ausführungsform der Erfindung ist die vierte Rahmenkonstruktion mit einer Mehrzahl von klappbaren ersten Stützen gelenkig verbunden. Die Stützen gleichen den Niveauunterschied zwischen dem Boden und der Liegefläche aus und ermöglichen einen stabilen Stand der Liegefläche.

Bevorzugt sind die Plattformen, die Rahmenkonstruktionen und die Stützen aus einem Leichtmetall, insbesondere Aluminium gefertigt. Denkbar sind auch andere gewichtsoptimierte Materialien wie faserverstärkte Kunststoffe oder Carbon.

Zweckmässigerweise weisen die zweite und dritte Rahmenkonstruktion eine gemeinsame erste Querstange auf. Mit Vorteil weisen auch die dritte und vierte Rahmenkonstruktion eine gemeinsame zweite Querstange auf. Die erste Querstange bildet ein gemeinsames Gelenk für die zweite und die dritte Rahmenkonstruktion. Die zweite Querstange bildet ein gemeinsames Gelenk für die dritte und vierte Rahmenkonstruktion. Zusätzlich kann die dritte Plattform auf der zweiten Querstange aufliegen, wodurch die Liegefläche noch stabiler ist.

Als vorteilhaft erweist es sich, wenn in der eingeklappten Position die dritte Plattform und die erste Querstange lösbar an der ersten Rahmenkonstruktion befestigbar sind. Diese Befestigung kann durch Gummizugkordeln oder Klettbänder erfolgen und ermöglicht eine klapperfreie kompakte Konstruktion. Dadurch ist der Anhänger in der zusammengeklappten Position frei von störenden Geräuschen während der Fahrt.

Zweckmässigerweise sind in der eingeklappten Position die zweiten Längsstangen lösbar an den ersten Längsstangen befestigbar. Dabei liegen die geklappten zweiten Längsstangen und die hinteren Teile der ersten Längsstangen aneinander und können in dieser Position einfach aneinandergebunden werden. Dadurch wird die Gestängekonstruktion in der zusammengeklappten Position noch kompakter.

Von Vorteil ist es, wenn der Fahrradanhänger in der eingeklappten Position eine Breite zwischen 650 und 800 mm und eine Länge zwischen 700 und 800 mm aufweist. Diese kompakten Abmessungen, hervorgerufen durch die klappbaren Plattformen und die klappbaren Stangen, führen dazu, dass der Anhänger beim Ziehen nicht stört und die Fahreigenschaften von bekannten Kinderanhängern besitzt.

Dadurch, dass die Liegefläche, gebildet aus der ersten, zweiten und dritten Plattform, eine Länge zwischen 1900 mm und 2100 mm und eine Breite zwischen 600 und 700 mm aufweist, kann der Fahrradfahrer bequem auf der Liegefläche schlafen. Auf die Liegefläche kann selbstverständlich eine Campingmatratze, eine Luftmatratze oder eine mehrteilige Matratze aufgelegt werden. Innerhalb der ersten Rahmenkonstruktion ist ausreichend Platz vorhanden, um eine solche Matratze und weiter Utensilien für das Campen zu transportieren. Bevorzugt besitzt der Anhänger eine Breite, welche den Transport in Zügen erlaubt.

In einer weiteren besonders bevorzugten Ausführungsform der Erfindung umfasst der Fahrradanhänger die Zeltplane, welche in der ausgeklappten Position wenigstens die Liegefläche abdeckt und in der eingeklappten Position als Abdeckung für den Fahrradanhänger dient. Dadurch kann der Fahrradfahrer überall und jederzeit nächtigen, was die Flexibilität des Fahrradfahrers bei einer mehrtägigen Fahrradtour signifikant erhöht.

Von Vorteil ist es, wenn mit der ersten Querstange ein Ausleger klappbar verbunden ist, welcher Ausleger eine zweite klappbare Stütze aufweist und in seiner ausgeklappten Position von der Zeltplane abgedeckt ist. Der Ausleger ermöglicht es, dass die abgedeckte Fläche vergrössert wird und beispielsweise ein geschützter Sitzplatz vorhanden ist.

Als vorteilhaft erweist es sich, wenn an der Aussenseite der Zeltplane, bevorzugt im Bereich der ersten Rahmenkonstruktion, eine Solarzelle befestigt ist. Die Solarzelle kann den ganzen Tag Strom produzieren, unabhängig davon ob die Plattformen ein- oder ausgeklappt sind. Wie weiter oben bereits ausgeführt, kann in dem Stauraum eine Batterie positioniert sein, welche durch die Solarzelle geladen wird. Die Batterie kann für elektrisches Licht benutzt werden oder sie kann die Ersatzbatterie für ein Elektro-Fahrrad sein.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine perspektivische Ansicht eines Camping-Fahrradanhängers in einer ausgeklappten Position von schräg hinten;
- Figur 2:: eine Seitenansicht des Fahrradanhängers aus Figur 1;
- Figur 3:: eine perspektivische Ansicht des Anhängers in einer teileingeklappten Position, bei welcher eine zweite und dritte Plattform nach innen geklappt sind;
- Figur 4:: eine perspektivische Ansicht des Anhängers in einer weiteren teileingeklappten Position, bei welcher die zweite und dritte Plattform vollständig eingeklappt sind;
- Figur 5:: eine perspektivische Ansicht des Anhängers in einer weiteren teileingeklappten Position, bei welcher eine zweite und dritte Rahmenkonstruktion teilweise eingeklappt sind;
- Figur 6:: eine perspektivische Ansicht des Anhängers in der vollständig eingeklappten Position
- Figur 7:: eine perspektivische Ansicht eines Auslegers mit einer zweiten Stütze, welcher gelenkig an einer ersten Querstange befestigt ist;
- Figur 8:: eine erste perspektivische Ansicht des Anhängers in der ausgeklappten Position mit einer aufgespannten Zeltplane;
- Figur 9:: eine zweite perspektivische Ansicht des Anhängers in der ausgeklappten Position mit einer aufgespannten Zeltplane;
- Figur 10:: eine dritte perspektivische Ansicht des Anhängers in der ausgeklappten Position mit einer aufgespannten Zeltplane und
- Figur 11:: eine vierte perspektivische Ansicht des Anhängers in der eingeklappten Position mit der Zeltplane als Abdeckung für den Fahrradanhänger.

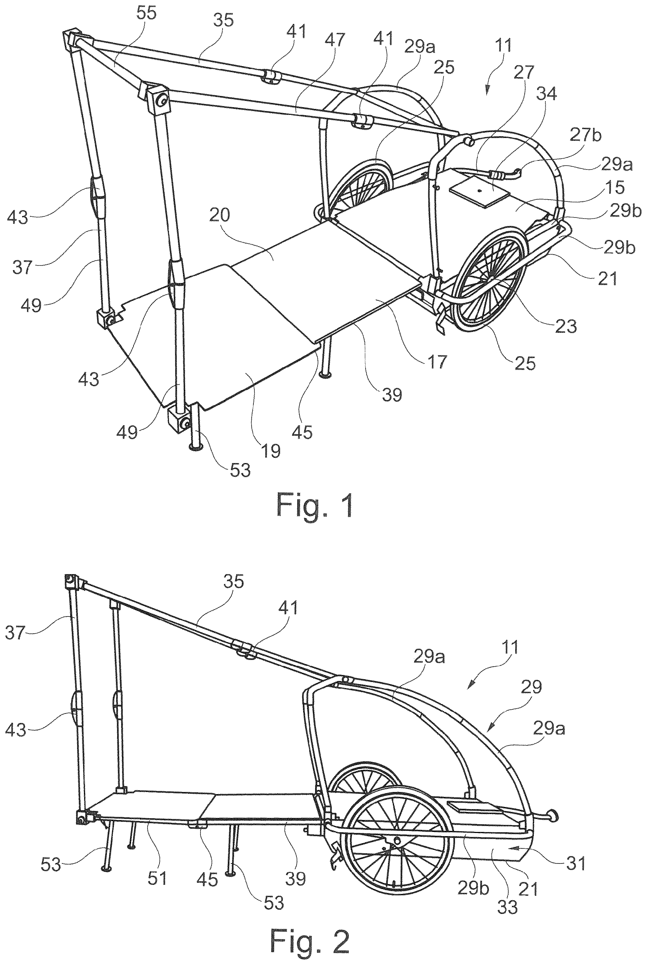

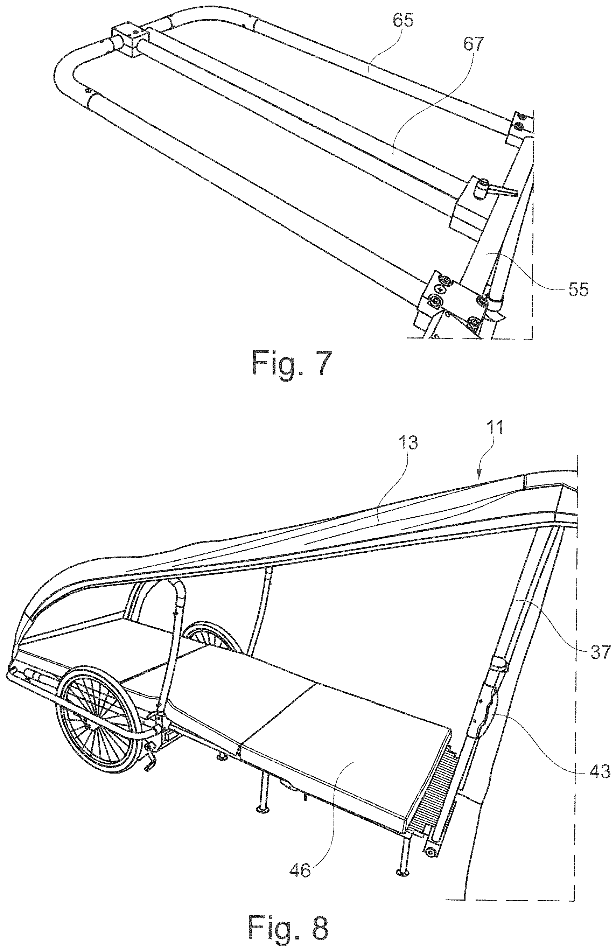

In den Figuren 1 bis 6 und 8 bis 11 ist ein Camping-Fahrradanhänger gezeigt, welcher gesamthaft mit dem Bezugszeichen 11 bezeichnet ist und in weiterer Folge als Anhänger 11 bezeichnet wird. In den Figuren 1 bis 6 ist der Anhänger ohne eine Zeltplane 13 gezeigt, wohingegen in den Figuren 8 bis 11 die Zeltplane 13 auf das Gestänge des Anhängers 11 aufgespannt ist.

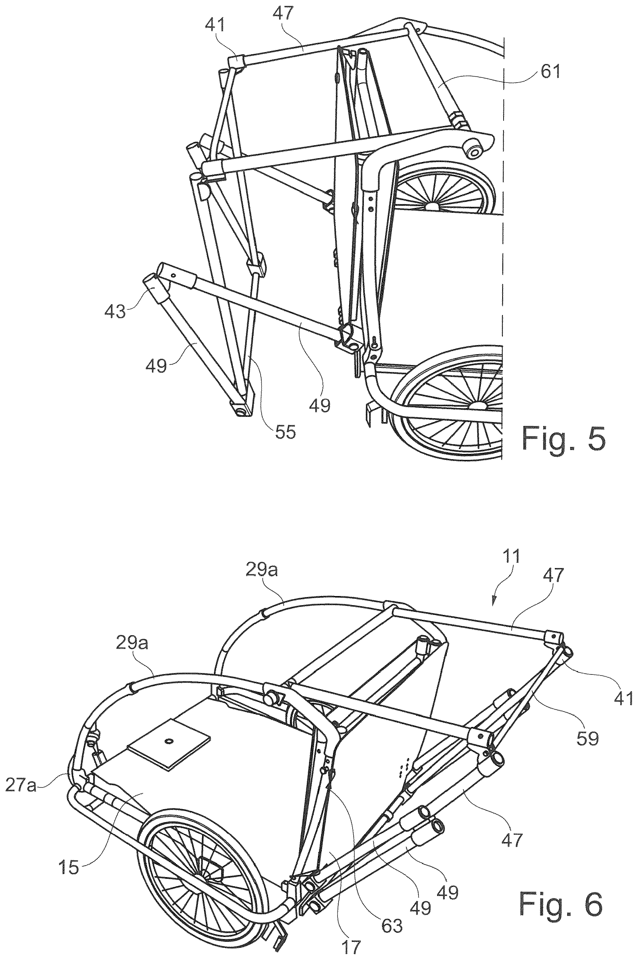

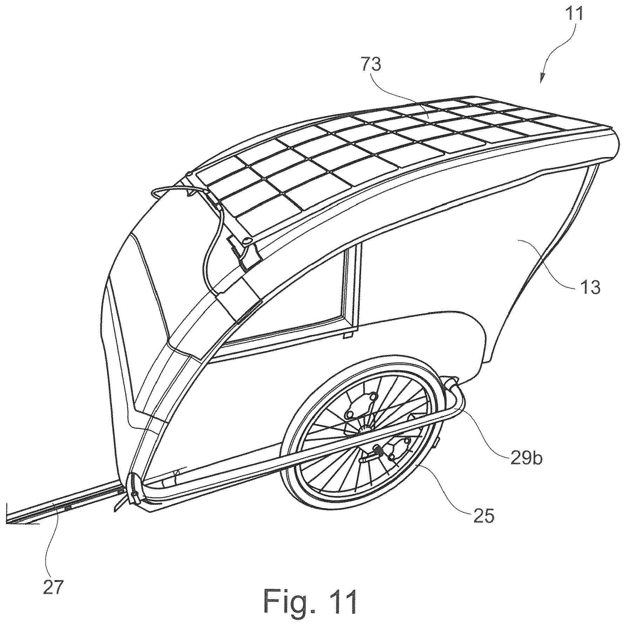

Der Anhänger 11 umfasst eine erste Plattform 15, eine zweite Plattform 17, welche gelenkig mit der ersten Plattform 15 verbunden ist und eine dritte Plattform 19, welche gelenkig mit der zweiten Plattform 17 verbunden ist. Die zweite und die dritte Plattform 17,19 lassen sich demnach zwischen einer ausgeklappten Position (Figuren 1, 2, 8, 9, 10) und einer eingeklappten Position (Figuren 5 und 11) verschwenken. In der ausgeklappten Position bilden die Plattformen 15,17,19 eine Liegefläche 20 und können von der Zeltplane 13 abgedeckt werden (Figuren 8 bis 10). In der eingeklappten Position ist der Anhänger fahrbereit und kann von einem Fahrrad gezogen werden.

Die Basis des Anhängers 11 ist bevorzugt durch die erste Plattform 15 und eine vierte Plattform 21, eine Achse 23, an welchen zwei Laufräder 25 drehend befestigt sind, eine Deichsel 27 und eine erste Rahmenkonstruktion 29 gebildet. Die Deichsel 27 ist mit einem ersten Ende 27a an der ersten Rahmenkonstruktion befestigt und lässt sich mit einem zweiten Ende 27b an einem Fahrrad ankuppeln.

Die erste Rahmenkonstruktion 29 ist durch zwei Bügel 29a und einen Rechteckrahmen 29b gebildet. Die Laufräder 25 sind zwischen dem Rechteckrahmen 29b und der ersten und vierten Plattform 15,21 angeordnet.

Die Basis des Anhängers 11 bzw. das Grundchassis können mit Ausnahme der ersten Plattform 15 von einem in grossen Stückzahlen produzierten zweisitzigen Kinderanhänger übernommen werden. Dies hat den enormen Vorteil, dass ein solcher Kinderanhänger durch die grossen Stückzahlen günstig in der Anschaffung ist und zu dem erfindungsgemässen Camping-Fahrradanhänger 11 aufgerüstet werden kann. Zwischen der ersten und der vierten Plattform 15,21 ist ein Stauraum 31 gebildet, welcher von Seitenwänden 33 flankiert ist. Die Seitenwände 33 bilden zusammen mit der vierten Plattform 21 eine Wanne, welche üblicherweise Teil des Kinderanhängers ist. Der Stauraum 31 kann über eine Luke 34 zugänglich gemacht werden.

Zur Stabilisierung der Plattformen 15,17,19 bzw. der Liegefläche 20 sind eine zweite Rahmenkonstruktion 35, eine dritte Rahmenkonstruktion 37 und eine vierte Rahmenkonstruktion 39 vorgesehen. Die zweite Rahmenkonstruktion 35 ist gelenkig mit den Bügeln 29a und der dritten Rahmenkonstruktion 37 verbunden. Die dritte Rahmenkonstruktion 37 ist gelenkig mit der zweiten Rahmenkonstruktion 35 und der dritten Plattform 19 bzw. der vierten Rahmenkonstruktion 39 verbunden. Die vierte Rahmenkonstruktion 39 trägt die zweite und dritte Plattform 17,19 und ist neben der dritten Rahmenkonstruktion 37 auch mit dem Rechteckrahmen 29b gelenkig verbunden.

Die zweite, dritte und vierte Rahmenkonstruktion 35,37,39 bilden ein klappbares Gestänge, wohingegen die erste Rahmenkonstruktion 29 ein festes Gestänge bildet. Die zweite Rahmenkonstruktion 35 weist erste Gelenke 41 auf. Die dritte Rahmenkonstruktion 37 weist zweite Gelenke 43 auf. Die vierte Rahmenkonstruktion 39 weist dritte Gelenke 45 auf. Die Gelenke 41,43,45 der Rahmenkonstruktionen 35,27,39 sind derart orientiert, dass die Rahmenkonstruktionen 29,35,37,39 in der ausgeklappten Position ein stabiles Tragwerk bilden. Dadurch ist die Liegefläche 20 wackelfrei und bewirkt einen guten Schlafkomfort. Auf der Liegefläche 20 kann eine Matratze 46 (Figur 8) aufgelegt werden. Um den Schlafkomfort noch weiter zu verbessern können die drei Plattformen 15,17,19 als Lattenrost ausgebildet sein.

Die ersten Gelenke 41 machen zwei erste Längsstangen 47 der zweiten Rahmenkonstruktion 35 klappbar. Die zweiten Gelenke 43 machen zwei zweite Längsstangen 49 der dritten Rahmenkonstruktion 37 klappbar. Die dritten Gelenke 45 machen zwei dritte Längsstangen 51 der vierten Rahmenkonstruktion 39 klappbar.

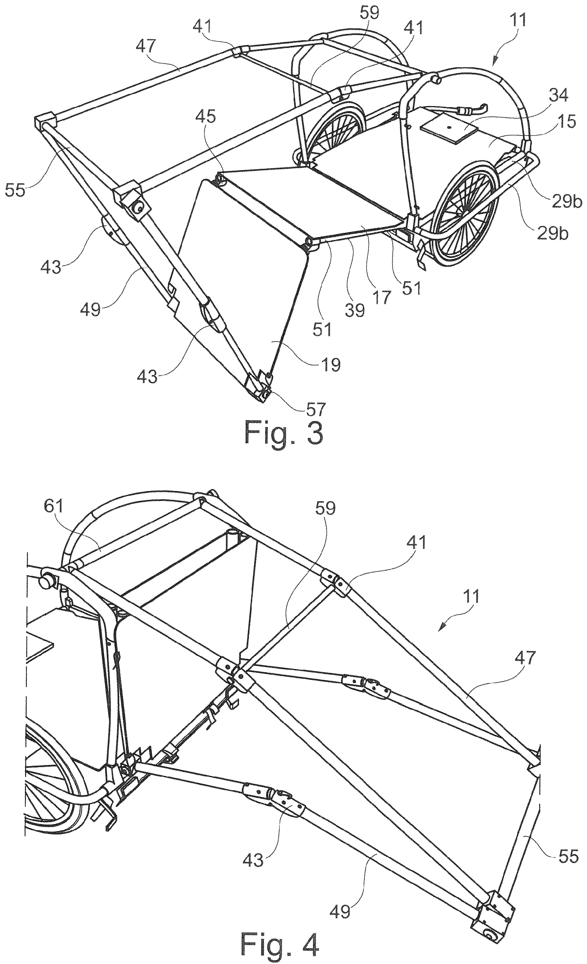

Wie in den Figuren 3, 4 und 5 gezeigt ist, werden beim Überführen von der ausgeklappten in die eingeklappte Position die ersten Längsstangen 47 mit den ersten Gelenken nach aussen geklappt. Die zweiten Längsstangen 49 werden mit den zweiten Gelenken 43 nach innen geklappt und die dritten Längsstangen 51 werden mit den dritten Gelenken 45 nach innen geklappt.

Für einen sicheren Stand der Liegefläche 20 tragen auch eine Mehrzahl von klappbaren ersten Stützen 53 bei. Diese stützen in der ausgeklappten Position die vierte Rahmenkonstruktion 39. Die ersten Stützen 53 sind gelenkig an den dritten Längsstangen 51 befestigt und lassen sich an die zweite bzw. an die dritte Plattform 17,19 klappen.

Zur Vervollständigung des Tragwerkes weisen die zweite und dritte Rahmenkonstruktion 35,37 eine gemeinsame erste Querstange 55 auf und die dritte und vierte Rahmenkonstruktion 37,39 weisen eine zweite gemeinsame Querstange 57 auf. Zur weiteren Stabilisierung des Tragwerkes sind die ersten Gelenke 41 mit einer dritten Querstange 59 verbunden und die gelenkige Verbindung der zweiten Rahmenkonstruktion 35 mit den Bügeln 29a ist durch eine vierte Querstange 61 stabilisiert.

In den Figuren 3 und 4 ist gezeigt, dass in einem ersten Klappschritt zuerst die zweite und dritte Plattform 17,19 an die Hinterseite der Bügeln 29a geklappt werden. Die dritte Plattform 19 kann dann lösbar mit den Bügeln 19a verbunden werden. Dazu können beispielsweise Gummizugkordeln 63 dienen.

In einem zweiten Klappschritt werden die ersten und zweiten Längsstangen 47,49 aneinander geklappt und werden lösbar, beispielsweise mit einem Klettband, aneinandergehalten. Diese Position ist in Figur 6 gezeigt und stellt die eingeklappte, fahrbereite Position des Anhängers 11 dar. In der eingeklappten Position wird die erste Querstange 55 an dem Rechteckrahmen 29b lösbar, beispielsweise mit einem Klettband, befestigt. In der eingeklappten Position sind die Rahmenkonstruktionen 35,37,39 daher eingeklappt und wackelfrei an dem Grundchassis gehalten. Die Aussenabmessungen des Anhängers 11 sind nur unwesentlich grösser als die Aussenabmessungen des Grundchassis.

Genauso rasch und unkompliziert können die zweite und dritte Plattform 17,19 von der eingeklappten in die ausgeklappte Position übergeführt werden. In der eingeklappten Position besitzt der Anhänger 11 eine Breite zwischen 650 und 800 mm und eine Länge zwischen 700 und 800 mm. Dadurch besitzt er in der eingeklappten Position die üblichen Abmessungen eines Kinderanhängers, stört das Fahrradfahren nicht, wenn er gezogen wird und ist einfach zu manövrieren.

In der Figur 7 ist ein Ausleger 65 gezeigt, welcher gelenkig mit der ersten Querstange 55 verbunden ist. Der Ausleger 65 weist eine zweite ausklappbare Stütze 67 auf. Im ausgeklappten Zustand ist der Ausleger von der Zeltplane 13 abgedeckt und von der zweiten Stütze 67 getragen. Der entstehende geschützte Bereich kann beispielsweise bei Regen zum Sitzen im Trockenen genutzt werden.

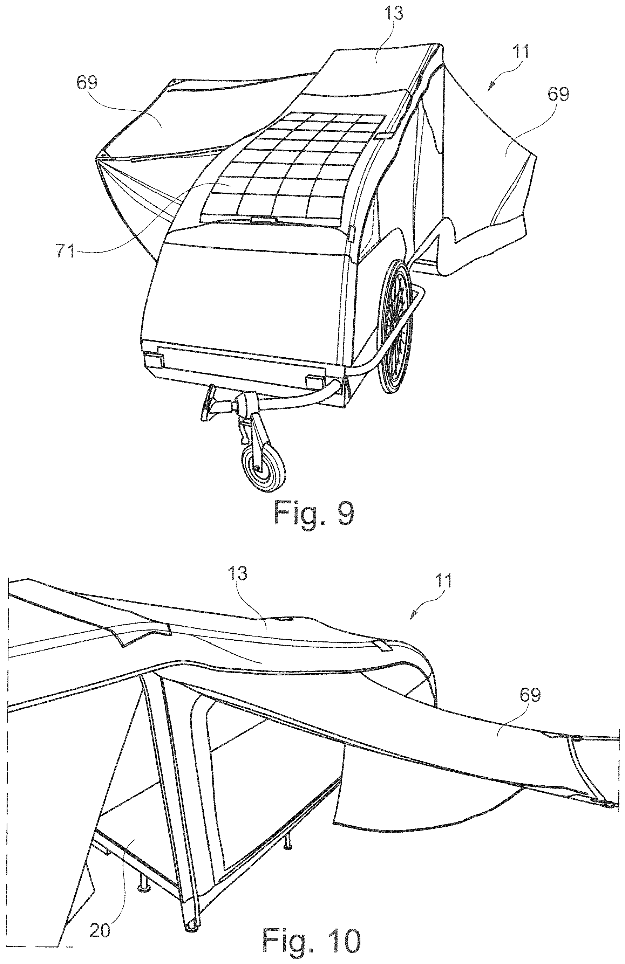

Wie in den Figuren 9 und 10 gezeigt, kann die Zeltplane 13 auch noch weitere Überdachungen 69 aufweisen, um eine möglichst grosse Fläche rund um den Anhänger 11 abzudecken.

In der Figur 11 ist der Anhänger 11 fahrbereit dargestellt. Das heisst die zweite und dritte Plattform 17,19 befinden sich zusammen mit der zweiten und dritten Rahmenkonstruktion 35,37 in der eingeklappten Position. Die Zeltplane 13 ist derart geschnitten, dass sie den Anhänger 11 oben und auf den Seiten vollständig abdeckt. Ein Teil der Zeltplane 13 lässt sich innerhalb des Anhängers 11 in der fahrbereiten, eingeklappten Position verstauen. Dadurch ist der Innenraum des Anhängers 11 während er von einem Fahrrad gezogen wird gut geschützt, insbesondere vor Regen und Verschmutzungen. Deshalb ist die Campingausrüstung, welche in dem Anhänger 11 transportiert wird, ebenfalls gut geschützt.

An der Aussenseite der Zeltplane 13 ist eine Solarzelle 71, bevorzugt im Bereich der ersten Rahmenkonstruktion 29, befestigt. Diese kann jederzeit, sowohl in der eingeklappten als auch in der ausgeklappten Position elektrischen Strom erzeugen, welcher eine Batterie lädt. Die Batterie kann in dem Stauraum verstaut sein und kann zum Beispiel elektrisches Licht erzeugen oder eine Reservebatterie für ein Elektrofahrrad sein.

Grundsätzlich sind die Bauteile des Anhängers 11 aus Aluminium hergestellt. Denkbar sind jedoch auch andere gewichtsoptimierte Materialien wie faserverstärkte Kunststoffe.

### Legende:

- 11: Camping-Fahrradanhänger
- 13: Zeltplane
- 15: Erste Plattform
- 17: Zweite Plattform
- 19: Dritte Plattform
- 20: Liegefläche
- 21: Vierte Plattform
- 23: Achse
- 25: Laufräder
- 27: Deichsel
- 27a: Erstes Ende der Deichsel
- 27b: Zweites Ende der Deichsel
- 29: Erste Rahmenkonstruktion
- 29a: Bügel
- 29b: Rechteckrahmen
- 31: Stauraum
- 33: Seitenwände
- 34: Luke
- 35: Zweite Rahmenkonstruktion
- 37: Dritte Rahmenkonstruktion
- 39: Vierte Rahmenkonstruktion
- 41: Erste Gelenke
- 43: Zweite Gelenke
- 45: Dritte Gelenke
- 46: Matratze
- 47: Erste Längsstangen
- 49: Zweite Längsstangen
- 51: Dritte Längsstangen
- 53: Erste Stützen
- 55: Erste Querstange
- 57: Zweite Querstange
- 59: Dritte Querstange
- 61: Vierte Querstange
- 63: Gummizugkordeln
- 65: Ausleger
- 67: Zweite Stütze
- 69: Überdachungen
- 71: Solarzelle

## Patentansprüche

1. Camping-Fahrradanhänger (11) zum Bereitstellen einer Liegefläche (20) und zum Überspannen der Liegefläche (20) mit einer Zeltplane (13) aufweisend
- eine erste Plattform (15),
- eine Achse (23), welche an der ersten Plattform (15) befestigt ist und an welcher zwei Laufräder (25) drehend befestigt sind,
- eine erste Rahmenkonstruktion (29), welche sich oberhalb und unterhalb der ersten Plattform (15) erstreckt und
- eine Deichsel (27), welche mit ihrem ersten Ende (27a) an der ersten Rahmenkonstruktion (15) befestigt ist und mit ihrem zweiten Ende (27b) an einem Fahrrad ankuppelbar ist,
**dadurch gekennzeichnet,**
**dass** die erste Rahmenkonstruktion (15) gelenkig mit einer zweiten Plattform (17) und die zweite Plattform (17) gelenkig mit einer dritten Plattform (19) verbunden ist, wodurch sich die zweite und dritte Plattform (17,19) zwischen einer eingeklappten Position, in welcher der Anhänger (11) fahrbereit ist, und einer ausgeklappten Position, in welcher die Plattformen (15,17,19) die Liegefläche (20) bilden, verschwenkbar sind.

2. Fahrradanhänger nach Anspruch 1, **dadurch gekennzeichnet, dass** der Anhänger (11) eine zweite und eine dritte Rahmenkonstruktion (35,37) aufweist, wobei die zweite Rahmenkonstruktion (35) gelenkig mit der ersten und der dritten Rahmenkonstruktion (29,37) verbunden ist und die dritte Rahmenkonstruktion (37) gelenkig mit der zweiten Rahmenkonstruktion (35) und der dritten Plattform (19) verbunden ist.

3. Fahrradanhänger nach Anspruch 1 oder 2, **dadurch gekennzeichnet, dass** die zweite und dritte Plattform (17,19) von einer vierten Rahmenkonstruktion (39) getragen ist, welche am Übergang von der zweiten zur dritten Plattform (17,19) klappbar ist.

4. Fahrradanhänger nach einem der vorangehenden Ansprüche, **dadurch gekennzeichnet, dass** unterhalb der ersten Plattform (15) eine vierte Plattform (21) angeordnet ist, wodurch zwischen der ersten und der vierten Plattform (15,21) ein Stauraum (31) gebildet ist.

5. Fahrradanhänger nach Anspruch 4, **dadurch gekennzeichnet, dass** der Fahrradanhänger als Basis einen zwei-sitzigen Kinderanhänger besitzt, welcher Kinderanhänger die vierte Plattform (21), die Achse (23) mit den zwei Laufrädern (25), die Deichsel (27) und die erste Rahmenkonstruktion (29) aufweist.

6. Fahrradanhänger nach einem der Ansprüche 2 bis 5, **dadurch gekennzeichnet, dass** die zweite bis vierte Rahmenkonstruktion (35,37,39) ein klappbares Gestänge bilden, die erste Rahmenkonstruktion (29) ein festes Gestänge bildet und die Rahmenkonstruktionen (29,35,37,39) im ausgeklappten Zustand ein Tragwerk bilden.

7. Fahrradanhänger nach einem der Ansprüche 2 bis 6, **dadurch gekennzeichnet, dass** die zweite Rahmenkonstruktion (35) zwei erste Längsstangen (47) aufweist, welche beim Wechsel von der ausgeklappten Position in die eingeklappte Positionen nach aussen klappbar sind.

8. Fahrradanhänger nach einem der Ansprüche 2 bis 7, **dadurch gekennzeichnet, dass** die dritte Rahmenkonstruktion (37) zwei zweite Längsstangen (49) aufweist, welche beim Wechsel von der ausgeklappten Position in die eingeklappte Positionen nach innen klappbar sind.

9. Fahrradanhänger nach einem der Ansprüche 3 bis 8, **dadurch gekennzeichnet, dass** die vierte Rahmenkonstruktion (39) zwei dritte Längsstangen (51) aufweist, welche beim Wechsel von der ausgeklappten Position in die eingeklappte Positionen nach innen klappbar sind.

10. Fahrradanhänger nach einem der Ansprüche 3 bis 9, **dadurch gekennzeichnet, dass** die vierte Rahmenkonstruktion (39) mit einer Mehrzahl von klappbaren ersten Stützen (53) gelenkig verbunden ist.

11. Fahrradanhänger nach einem der Ansprüche 2 bis 10, **dadurch gekennzeichnet, dass** die zweite und dritte Rahmenkonstruktion (35,37) eine gemeinsame erste Querstange (55) aufweisen.

12. Fahrradanhänger nach einem der Ansprüche 3 bis 12, **dadurch gekennzeichnet, dass** die dritte und vierte Rahmenkonstruktion (39) eine gemeinsame zweite Querstange (57) aufweisen.

13. Fahrradanhänger nach einem der Ansprüche 11 oder 12, **dadurch gekennzeichnet, dass** in der eingeklappten Position die dritte Plattform (19) und die erste Querstange (55) lösbar an der ersten Rahmenkonstruktion (29) befestigbar sind.

14. Fahrradanhänger nach einem der Ansprüche 8 bis 14, **dadurch gekennzeichnet, dass** in der eingeklappten Position die zweiten Längsstangen (49) lösbar an den ersten Längsstangen (47) befestigbar sind.

15. Fahrradanhänger nach einem der vorangehenden Ansprüche, **dadurch gekennzeichnet, dass** der Fahrradanhänger (11) in der eingeklappten Position eine Breite zwischen 650 und 800 mm und eine Länge zwischen 700 und 800 mm aufweist.

16. Fahrradanhänger nach einem der vorangehenden Ansprüche, **dadurch gekennzeichnet, dass** die Liegefläche (20), gebildet aus der ersten, zweiten und dritten Plattform (15,17,19), eine Länge zwischen 1900 mm und 2100 mm und eine Breite zwischen 600 und 700 mm aufweist.

17. Fahrradanhänger nach einem der vorangehenden Ansprüche, **dadurch gekennzeichnet, dass** der Fahrradanhänger (11) die Zeltplane (13) umfasst, welche in der ausgeklappten Position wenigstens die Liegefläche (20) abdeckt und in der eingeklappten Position als Abdeckung für den Fahrradanhänger (11) dient.

18. Fahrradanhänger nach einem der Ansprüche 11 bis 17, **dadurch gekennzeichnet, dass** mit der ersten Querstange (55) ein Ausleger (65) klappbar verbunden ist, welcher Ausleger (65) eine zweite klappbare Stütze (67) aufweist und in seiner ausgeklappten Position von der Zeltplane (13) abgedeckt ist.

19. Fahrradanhänger nach einem der vorangehenden Ansprüche, **dadurch gekennzeichnet, dass** an der Aussenseite der Zeltplane (13), bevorzugt im Bereich der ersten Rahmenkonstruktion (29), eine Solarzelle (71) befestigt ist.

## Claims

1. Camping bicycle trailer (11) for providing a sleeping area (20) and for spanning the sleeping area (20) with a tarpaulin (13) comprising:
- a first platform (15),
- an axis (23) that is fixed to the first platform (15) and to which two wheels (25) are rotationally fixed,
- a first frame construction (29) that extends above and beneath the first platform (15) and
- a drawbar (27) that is fixed with its first end (27a) to the first frame construction (15) and that can be coupled with its second end (27b) to a bicycle,
**characterized in**
**that** the first frame construction (15) is hingedly connected to a second platform (17) and the second platform (17) is hingedly connected to a third platform (19) so that the second and the third platform (17, 19) are pivotable between a folded position in which the trailer (11) is ready to drive and an extended position in which the platforms (15, 17, 19) form the sleeping area (20).

2. Bicycle trailer according to claim 1, **characterized in that** the trailer (11) comprises a second a third frame construction (35, 37), wherein the second frame construction (35) is hingedly connected to the first and to the third frame construction (29, 37) and the third frame construction (37) is hingedly connected to the second frame construction (35) and to the third platform (19).

3. Bicycle trailer according to claim 1 or 2, **characterized in that** the second and the third platform (17, 19) is carried by a fourth frame construction (39) that is foldable at the junction from the second to the third platform (17, 19).

4. Bicycle trailer according to one of the preceding claims, **characterized in that** a fourth platform (21) is arranged beneath the first platform (15) so that a storage area (31) is formed between the first and the fourth platform (15, 21).

5. Bicycle trailer according to claim 4, **characterized in that** the bicycle trailer includes as a base a two-seat child trailer, which child trailer includes the fourth platform (21), the axis (23) with the two wheels (25), the drawbar (27) and the first frame construction (29).

6. Bicycle trailer according to one of the claims 2 to 5, **characterized in that** the second to fourth frame construction (35, 37, 39) form a foldable linkage, the first frame construction (29) a fixed linkage and the frame constructions (29, 35, 37, 39) in the extended condition form a supporting structure.

7. Bicycle trailer according to one of the claims 2 to 6, **characterized in that** the second frame construction (35) includes two first longitudinal rods (47) that can be folded outwards when changing from the extended position to the folded position.

8. Bicycle trailer according to one of the claims 2 to 7, **characterized in that** the third frame construction (37) includes two second longitudinal rods (49) that can be folded inwards when changing from the extended position to the folded position.

9. Bicycle trailer according to one of the claims 3 to 8, **characterized in that** the fourth frame construction (39) includes two third longitudinal rods (51) that can be folded inwards when changing from the extended position to the folded position.

10. Bicycle trailer according to one of the claims 3 to 9, **characterized in that** the fourth frame construction (39) is hingedly connected to a multitude of foldable first supports (53).

11. Bicycle trailer according to one of the claims 2 to 10, **characterized in that** the second and the third frame construction (35, 37) include a common first transverse rod (55).

12. Bicycle trailer according to one of the claims 3 to 11, **characterized in that** the third and the fourth frame construction (39) include a common second transverse rod (57).

13. Bicycle trailer according to one of the claims 11 or 12, **characterized in that** in the folded position the third platform (19) and the first transverse rod (55) can be removably connected to the first frame construction (29).

14. Bicycle trailer according to one of the claims 8 to 14, **characterized in that** in the folded position the second longitudinal rods (49) can be removably connected to the first longitudinal rods (47).

15. Bicycle trailer according to one of the preceding claims, **characterized in that** the bicycle trailer (11) in the folded position has a width between 650 and 800 mm and a length between 700 and 800 mm.

16. Bicycle trailer according to one of the preceding claims, **characterized in that** the sleeping area (20) formed by the first, the second and the third platform (15, 17, 19) has a length between 1900 mm and 2100 mm and a width between 600 and 700 mm.

17. Bicycle trailer according to one of the preceding claims, **characterized in that** the bicycle trailer (11) comprises the tarpaulin that in the extended position covers at least the sleeping area (20) and in the folded position serves as a covering for the bicycle trailer (11).

18. Bicycle trailer according to one of the claims 11 to 17, **characterized in that** a cantilever (65) is connected to the first transverse rod (55) so as to be able to be folded, which cantilever (65) includes a second foldable support (67) and is covered in its extended position by the tarpaulin (13).

19. Bicycle trailer according to one of the preceding claims, **characterized in that** a solar cell (71) is fixed to the outer side of the tarpaulin (13), preferably in the area of the first frame construction (29).

## Revendications

1. Remorque de vélo pour camping (11) pour mettre à disposition une surface de couchage (20) et pour couvrir la surface de couchage (20) avec une toile de tente (13) qui présente :
- une première plateforme (15),
- un axe (23) qui est fixé à la première plateforme (15) et sur lequel deux roues mobiles (25) sont fixées en rotation,
- une première construction de cadre (29) qui s'étend au-dessus et au-dessous de la première plateforme (15) et
- une barre d'attelage (27) qui est fixée avec sa première extrémité (27a) à la première construction de cadre (15) et qui peut être accouplée à un vélo avec sa seconde extrémité (27b),
**caractérisée en ce**
**que** la première construction de cadre (15) est reliée de manière articulée à une seconde plateforme (17) et la seconde plateforme (17) est reliée de manière articulée à une troisième plateforme (19) si bien que la seconde et la troisième plateforme (17, 19) sont pivotables entre la position rabattue, dans laquelle la remorque (11) est en état de rouler, et une position dépliée dans laquelle les plateformes (15, 17, 19) forment la surface de couchage (20).

2. Remorque de vélo selon la revendication 1, **caractérisée en ce que** la remorque (11) présente une seconde et une troisième construction de cadre (35, 37), cependant que la seconde construction de cadre (35) est reliée de manière articulée à la première et à la troisième construction de cadre (29, 37) et la troisième construction de cadre (37) est reliée de manière articulée à la seconde construction de cadre (35) et à la troisième plateforme (19).

3. Remorque de vélo selon la revendication 1, **caractérisée en ce que** la seconde et la troisième plateforme (17, 19) sont portées par une quatrième construction de cadre (39) qui est rabattable à la transition de la seconde à la troisième plateforme (17, 19).

4. Remorque de vélo selon l'une des revendications précédentes, **caractérisée en ce qu'**une quatrième plateforme (21) est placée en dessous de la première plateforme (15) si bien qu'un espace de stockage (31) est formé entre la première et la quatrième plateforme (15, 21).

5. Remorque de vélo selon la revendication 4, **caractérisée en ce que** la remorque de vélo possède comme base une remorque pour enfants à deux sièges, laquelle remorque pour enfants présente la quatrième plateforme (21), l'axe (23) avec les deux roues mobiles (25), la barre d'attelage (27) et la première construction de cadre (29).

6. Remorque de vélo selon l'une des revendications 2 à 5, **caractérisée en ce que** la seconde jusqu'à la quatrième construction de cadre (35, 37, 39) forment une tringlerie rabattable, la première construction de cadre (29) une tringlerie fixe et les constructions de cadre (29, 35, 37, 39) forment, à l'état déployé, une structure porteuse.

7. Remorque de vélo selon l'une des revendications 2 à 6, **caractérisée en ce que** la seconde construction de cadre (35) présente deux premières tiges longitudinales (47) qui sont rabattables vers l'extérieur lors du changement de la position déployée à la position rabattue.

8. Remorque de vélo selon l'une des revendications 2 à 7, **caractérisée en ce que** la troisième construction de cadre (37) présente deux secondes tiges longitudinales (51) qui sont rabattables vers l'intérieur lors du changement de la position déployée à la position rabattue.

9. Remorque de vélo selon l'une des revendications 3 à 8, **caractérisée en ce que** la quatrième construction de cadre (39) présente deux troisièmes tiges longitudinales (51) qui sont rabattables vers l'intérieur lors du changement de la position déployée à la position rabattue.

10. Remorque de vélo selon l'une des revendications 3 à 9, **caractérisée en ce que** la quatrième construction de cadre (39) est reliée de manière articulée à une multitude de premiers appuis rabattables (53).

11. Remorque de vélo selon l'une des revendications 2 à 10, **caractérisée en ce que** la seconde et la troisième construction de cadre (35, 37) présentent une première tige transversale commune (55).

12. Remorque de vélo selon l'une des revendications 3 à 11, **caractérisée en ce que** la troisième et la quatrième construction de cadre (39) présentent une seconde tige transversale commune (57).

13. Remorque de vélo selon l'une des revendications 11 ou 12, **caractérisée en ce que**, dans la position rabattue, la troisième plateforme (19) et la première tige transversale commune (55) peuvent être fixées de manière amovible à la première construction de cadre (29).

14. Remorque de vélo selon l'une des revendications 8 à 14, **caractérisée en ce que**, dans la position rabattue, les secondes tiges longitudinales (49) peuvent être fixées de manière amovible aux premières tiges longitudinales (47).

15. Remorque de vélo selon l'une des revendications précédentes, **caractérisée en ce que** la remorque de vélo (11) présente, dans la position rabattue, une largeur entre 650 et 800 mm et une longueur entre 700 et 800 mm.

16. Remorque de vélo selon l'une des revendications précédentes, **caractérisée en ce que** la surface de couchage (20), formée par la première, la seconde et la troisième plateforme (15, 17, 19), présente une longueur entre 1900 mm et 2100 mm et une largeur entre 600 et 700 mm.

17. Remorque de vélo selon l'une des revendications précédentes, **caractérisée en ce que** la remorque de vélo (11) comprend la toile de tente qui, dans la position déployée, recouvre au moins la surface de couchage (20) et, dans la position rabattue, sert de recouvrement pour la remorque de vélo (11).

18. Remorque de vélo selon l'une des revendications 11 à 17, **caractérisée en ce qu'**un bras (65) est relié de manière rabattable à la première tige transversale (55), lequel bras (65) présente un second appui rabattable (67) et, dans sa position déployée, est recouvert par la toile de tente (13).

19. Remorque de vélo selon l'une des revendications précédentes, **caractérisée en ce qu'**une cellule solaire (71) est fixée au côté extérieur de la toile de tente (13), de préférence dans la zone de la première construction de cadre (29).
